# EUROPEAN PATENT SPECIFICATION

(11) **EP 2 041 824 B1**
(45) Date of publication and mention of the grant of the patent: **20.02.2013**
(21) Application number: 07810361.1
(22) Date of filing: 12.07.2007
(51) Int. Cl.: B01J 31/12, H01M 4/90

(54) **MULTILAYER CATALYSTS FOR FUEL CELL OXYGEN ELECTRODES**
MEHRSCHICHTIGE KATALYSATOREN FÜR BRENNSTOFFZELLEN-SAUERSTOFFELEKTRODEN
CATALYSEURS MULTICOUCHES POUR ÉLECTRODES À OXYGÈNE POUR PILE À COMBUSTIBLE

(30) Priority: 14.07.2006 US 486665
(43) Date of publication of application: 01.04.2009
(73) Proprietor: Ovonic Battery Company, Inc., Rochester Hills, Michigan 48309 (US)
(72) Inventor: MAYS, William, Commerce, MI 48382 (US); OVSHINSKY, Stanford, R., Bloomfield Hills, MI 48304 (US); REICHMAN, Benjamin, West Bloomfield, MI 48323 (US); ZALLEN, Avram, West Bloomfield, MI 48323 (US); FETCENKO, Michael, A., Rochester, MI 48307 (US); HICKS, Tim, Redford, MI 48240 (US); STREBE, James, Clawson, MI 48017 (US); FIERRO, Cristian, Northville, MI 48167 (US)
(74) Representative: Pautex Schneider, Nicole Véronique
(86) International application number: PCT/US2007/015840
(87) International publication number: WO 2008/008405

(56) References cited:
- US-A1- 2004 247 988
- US-A1- 2004 247 988
- US-A1- 2005 043 170
- US-A1- 2005 064 274
- US-B1- 6 465 128

## Description

### RELATED APPLICATION INFORMATION

This application is a continuation-in-part of U.S. Pat. Appl. Ser. No. 10/457,624, entitled "Catalyst for Fuel Cell Oxygen Electrodes", filed on June 9, 2003.

### FIELD OF THE INVENTION

The present invention pertains generally to catalysts and more particularly to oxygen reduction catalysts. In particular, the present invention relates to catalysts that may be used in oxygen electrodes of fuel cells.

### BACKGROUND

With the increasing need to develop alternative forms of energy to address the problems of pollution and the dependence on oil, fuel cells have received increasing attention as a premier source of dean and quiet power. However, due to the costs associated with the materials that go into making these fuel cells, they are not economically feasible for use in many applications.

There are several competing fuel cell technologies. These technologies include alkaline fuel cells, proton exchange membrane (PEM) fuel cells, etc. Although each technology possesses certain advantages over the other, alkaline fuel cells offer the potential for higher power capability, high operating efficiency and lower cost of manufacture.

In an alkaline fuel cell, the reaction at the hydrogen electrode occurs between hydrogen and hydroxyl ions (OH⁻) present in the electrolyte that form water and release electrons:

H₂ + 2OH⁻ → 2H₂O + 2e⁻,

The oxygen reduction reaction typically takes place via a 2 step reaction, each step providing a 2 electron transfer. In other cases, such as with the use of pure platinum, it has been reported that oxygen reduction may be accomplished via a single step, 4 electron transfer. However, once the platinum is exposed to an impurity, the direct 4-electron transfer may not be realized.

The consequence of the two-step reduction process is the formation of peroxyl ions:

(1) O₂ + H₂O + 2e → HO₂⁻ + OH⁻.

'(2) HO₂⁻ + H₂O + 2e → 3 OH⁻.

Overall: O₂ + 2H₂O + 4e → 4OH^{-.}

Although the final reaction is ultimately hydroxyl ion formation, the formation of intermediate species can be very problematic. Peroxyl ions are very reactive and can oxidize many materials. In a porous oxygen diffusion electrode where the electrochemical reactions are taking place at the surface, the formation of peroxyl ions becomes detrimental to the performance of the fuel cell. The pores at the electrode surface provide sites for oxygen reduction as long as the pores are accessible to the electrolyte. Once the oxygen reduction takes place, peroxide formation as an intermediate of the product of reaction occurs within the pores. Since the pores are not through-hole pores, the peroxide has no way to escape except by diffusion into the bulk. Bulk diffusion can be a rather slow process. During this time, peroxide can (1) oxidize the teflonized carbon, (2) decompose and form gas bubbles that can block the pores causing a loss of surface area, and (3) react with the active catalyst material to destroy its character. All three of these factors can lead to gradual flooding and a loss of performance within the oxygen electrode. Thus, the effect of peroxide formation/reaction can be observed as a gradual increase in polarization and a sudden loss of performance.

Catalysis primarily occurs at certain favorable locations called active sites. It has generally been taught that these active sites can altered to increase the performance of catalysis. For example, as described in U.S. Patent No. 5,536,591, catalyst type, state, size, proximity, porosity and topology are several factors that can be altered to engineer new catalysts. The '591 patent and its progeny, demonstrate that small sized catalytic particles, such as 50 to 70 angstroms, can be formed in an oxide support within a very small proximity to one another, such as within 2 to 300 angstroms. Such catalysts have revolutionized the NiMH battery industry.

Catalysts can be either supported or non-supported. Supported catalysts are those that have the catalyst fixed to a carrier matrix, while non-supported catalysts are those that are free from any carrier matrix. Examples of supported catalysts include metals supported on carrier matrices such as refractory oxides, carbon, or silicon dioxide. Examples of non-supported catalysts include spongy metal catalysts, such as Raney nickel, spinels, or other fine metal powders, such as platinum, gold, palladium, silver, etc. There presently exist a multitude of supported catalysts, which have been designed for specific uses. Below are several examples of these catalysts.

Catalysts have been developed for the treatment of wastewater. See for example, U.S. Patent No. 4,670,360 to Habermann et al., entitled *Fuel Cell.* Habermann et al., which discloses a fuel cell having an activated carbon-containing anode and an activated carbon-containing cathode for use in the oxidative treatment of wastewaters containing oxygen or oxygen containing compounds. The patent describes using graphite and active carbon as a carrier support.

Catalysts have been developed for the cathodic evolution of hydrogen in electrolysis plants. See for example, U.S. Patent No. 3,926,844 to Benczur-Urmossy, entitled *Catalysts For The Cathodic Hydrogen Development.* Benczar-Urmossy, which describes depositing X-ray-amorphous boride compound of nickel, cobalt or iron on a supporting structure. The compound Is deposited from an aqueous solution having metallic ions such as nickel ions, cobalt ions, or iron ions, with a complexing agent and a water-soluble borate or borazane at a temperature of below 60°C.

Catalysts have been developed for use in hydrocracking gas oil. See for example U.S. Patent No. 4,686,030 issued to Ward, entitled *Mild Hydrocracking with a Catalyst Having A Narrow Pore Size Distribution,* which discloses metal oxide catalysts supported on a calcined oxide support. The catalyst may be made by extruding a gamma alumina-containing material through a die, drying the alumina, and breaking the alumina into pieces to form the support. The support is then impregnated with nickel nitrate hexahydrate and ammonium heptamolyhdate dissolved in phosphoric acid, dried and calcinated.

Catalysts have been developed for use in air cathodes for electrochemical power generation. See for example, U.S. Patent 6,368,751 B1 to Yao et al., entitled, Electrochemical Electrode For Fuel Cell. Yao et al., which discloses an electrochemical cathode, which includes a porous metal foam substrate impregnated with a mixture of carbon, CoTMPP and Teflon.

A number of techniques for making catalysts have also been developed. These techniques include impregnating, coating, or simply mixing metal powder in with a support. See for example, U.S. Patent 4,113,658 to Geus, entitled Process for Homogeneous *Deposition* Precipitation of Metal Compounds on *Support or Carrier Materials, which* discloses a method of making supported catalysts by precipitating a metal salt solution onto a carrier matrix.

Another technique for making catalyst was taught by Ovshinsky et al. in U.S. Patent No. 4,544,473, entitled Catalytic Electrolytic Electrode, filed May 12, 1980, which describes making amorphous, catalytic bodies by various deposition techniques.

Catalysts can also be made by depositing organometallic catalysts onto a support and then removing the organic material by heating at a relatively high temperature. See for example U.S. Patent No. 4,980,037, entitled Gas Diffusion Cathodes, Electrochemical Cells and Methods Exhibiting Improved Oxygen Reduction Performance, issued Dec. 25, 1990 to Hossain et al.

US-A-2005/0064274 discloses a low temperature alkaline fuel cell having a hydrogen electrode and an oxygen electrode materials which provide the fuel cell with high performance at low temperatures with the use of a non-precious metal catalyst comprising a catalytically active material supported on a carrier matrix, wherein said catalytically active material may be a mixed-valence nanoclustered oxide(s), an organometallic material or a combination thereof.

Because the design of each catalyst is often the limiting factor to its ultimate end use, there continues to be a need for new and improved catalysts and ways for making them. Furthermore, if fuel cells are to become cost competitive with other forms of power generation, high efficiency, low cost catalysts for use in these fuel cells needs to be provided.

### SUMMARY OF THE INVENTION

The present invention addresses one or more of the above-mentioned deficiencies and/or others by providing atomically engineered catalysts based on Ovshinsky's principles of atomic engineering to produce unusual orbital interactions and new chemical properties. The catalyst includes a catalytically active material supported on a carrier matrix. The catalytically active material of the present invention is defined as under claim 1 or claim 11. These catalysts may be particularly useful tor improved oxygen reduction, polarization, and peroxide decomposition in a cathode of a fuel cell, such as an alkaline fuel cell.

In one embodiment of the present invention there is provided a supported catalyst comprising a carrier matrix and catalytically active material including a mixed-valence, nanoclustered metal oxide region. The catalytically active material is preferably substantially uniformly distributed about and supported by the carrier matrix.

In another embodiment of the present invention there is provided a supported catalyst comprising a carrier matrix and catalytically active material including an organometallic. The catalytically active material is preferably substantially uniformly distributed about and supported by the carrier matrix.

In another embodiment of the present invention there is provided a supported catalyst comprising a carrier matrix and catalytically active material distributed about the carrier matrix, wherein the catalytically active material includes a mixed-valence, nanoclustered metal oxide region and an organometallic. The catalytically active material is preferably substantially uniformly distnbuted about and supported by the carrier matrix.

In one embodiment of the present invention there is provided a supported catalyst comprising a carrier matrix and catalytically active material including two or more layers or regions of mixed-valence, nanoclustered metal oxides. The catalytically active layers or regions are preferably substantially uniformly distributed about and supported by the carrier matrix and the underlying layers and/or regions of the structure. The mixed-valence nanoclustered metal oxide layers or regions may be arranged as discrete regions or as a sequence of layers.

In another embodiment of the present invention there is provided a supported catalyst comprising a carrier matrix and two or more catalytically active layers or regions that include one or more organometallic materials. Each catalytically active organometallic layer or region is preferably substantially uniformly distributed about and supported by the carrier matrix and the underlying organometallic layers and/or regions. The organometallic layers or regions include one or more metals and one or more ligands coordinated thereto. The ligands may be macrocycles, bidentate, tridentate or other multidentate ligands. The organometallic layers or regions may be discrete regions or arranged as a sequence of layers.

In another embodiment of the present invention there is provided a supported catalyst comprising a carrier matrix and catalytically active material distributed about the carrier matrix, wherein the catalytically active material includes a sequence of two or more layers or regions, each of which includes a mixed-valence, nanoclustered metal oxide and/or an organometallic. Each catalytically active material is preferably substantially uniformly distributed about and supported by the carrier matrix and underlying catalytic layers and/or regions. In this embodiment, the supported catalytic material may further include additional mixed-valence nanoclustered metal oxide and/or organometallic layers or regions.

In another embodiment of the present invention there is provided a supported catalyst comprising a carrier matrix and catalytically active material including mixed-valence, nanoclustered metal oxide region and an organometallic, where the mixed-valence, nanoclustered catalyst is supported on the organometallic catalyst. Alternatively, the organometallic may be supported on the mixed- valence nanoclustered metal oxide region. The catalytically active material is preferably uniformly distributed about and supported by the carrier matrix.

In still another embodiment of the present invention there is provided a composite catalyst. The composite catalyst includes a first catalytically active material on a first carrier matrix and a second catalytically active material on a second carrier matrix. The carrier matrices with their respective catalysts are preferably mixed or blended together. The composite catalyst preferably includes mixed-valence, nanoclustered metal oxide region substantially uniformly distributed about and supported by a first carbon based carrier matrix and an organometallic substantially uniformly distributed about and supported by a second carbon based carrier matrix.

For a more complete understanding of the invention, reference is now made to the following Brief Description of the Drawings and Detailed Description of Preferred Embodiments.

### BRIEF DESCRIPTION OF THE DRAWINGS

Fig. 1 is a SEM of catalytically active material not forming part of the present invention;
Fig. 2 is a selected area electron diffraction pattern of (Co²⁺, Co³⁺)₃O₄ mixed-valence, nanoclustered metal oxide not forming part of the present invention.
Fig. 3 is a three dimensional view of a crystal structure for a (Co²⁺, Co³⁺)₃O₄ mixed-valence, nanoclustered metal oxide not forming part of the present invention.
Fig. 4 is a TEM of a mixed-valence, catalytic material supported on a carrier matrix not forming part of the present invention;
Fig. 5 Is a TEM of mixed-valence, catalytic material supported on a carrier matrix not forming part of the present invention;
Fig. 6 is a TEM of mixed-valence, catalytic material supported on a carrier matrix not forming part of the present invention;
Fig. 7 is a cross-sectional view of an oxygen electrode in accordance with an embodiment of the present invention
Fig. 8 is a graphical comparison of the performance of a catalyst not forming part of the present invention; and
Fig. 9 is a graphical comparison of the performance of a catalyst not forming part of the present invention.

### DETAILED DESCRIPTION OF PREFERRED EMBODIMENTS OF THE INVENTION

In accordance with the present invention, there is described herein a catalyst which can be used for oxygen reduction. The catalyst comprises a catalytically active material supported on a carrier matrix. The catalytically active material of the present invention is defined as under claim 1 or claim 11. The catalytically active material is preferably provided at a loading of: 30% by weight or less, 20% by weight or less 10% by weight or less, 5% by weight or less, but more preferably at a loading of 1% to 5% by weight. The catalyst may be particularly useful for enhancing the rate of oxygen reduction in an oxygen electrode of a fuel cell. The catalyst may also be useful for catalyzing hydrogenation, hydro-cracking, hydrogen oxidation, reduction alkylation, ammonolysis, and electrochemical reactions.

As mentioned above, the catalytically active material may comprise a mixed-valence, nanoclustered metal oxide region. Mixed-valence, nanoclustered metal oxide regions can provide a diverse range of active sites for enhancing the rate of a multi-step reaction. Mixed-valence oxide region is any mixture of oxides of more than one valence state. The valence states preferably include more than one of the +1, +2, +3, +4, +5 and +6 oxidation states. The mixed-valence, nanoclustered metal oxide region may include oxides having a plurality of valence states, such as two, three, four or more different valence states. The average valence of any particular nanocluster may be between 0 and +5, 0 and +1, +1 and +2, +2 and +3, +3 and +4 and +4 and +5. A preferred mixed-valence nanoclustered metal oxide region is from +1 to +3. The nanoclusters may include a higher concentration of metal atoms in a lower oxidation state than metal atoms in a higher oxidation state. The ratio of atoms in the higher oxidation state to the atoms in the lower oxidation state may range from 1:4 to 3:4, preferably 1:3 to 2:3, or more preferably 1:2 to 2:3. Providing nanoclusters with a higher concentration of metal atoms having a lower valence state than higher valence state can allow for a more favorable reaction rate in a multi-step reaction mechanism.

The mixed-valence, nanoclustered metal oxide region may be multi-functional. A multi-functional catalyst has one component that provides a rate of reaction that favors a first reaction step and another component that provides a rate of reaction that favors a second reaction step over the first. By providing a multi-functional catalytically active material, complex reactions having multiple steps can be more effectively driven.

The mixed-valence, nanoclustered metal oxide region may be multicomponent. A multicomponent nanoclustered metal oxide region has more than one element. Preferred multicomponent nanoclustered metal oxide regions have two or more, three or more or even four or more elements. Preferred elements include those selected from the transition metals, such as nickel, cobalt, manganese, etc. Preferred elements include those that provide hydrogenation catalysis. Mulitcomponent nanoclusters can provide improved catalytic activity for complex reactions and can synergistically interact to outperform single element, uniform clusters. The multiple elements may be provided in solid solution to form the multicomponent oxide. Preferred multicomponent oxide regions include those that are mostly cobalt oxide, mostly nickel oxide or mostly manganese oxide. Preferred multicomponent oxide regions include cobalt-manganese oxide, cobalt-nickel, nickel-manganese oxide, cobalt-manganese-nickel oxide. The multicomponent oxide region may include one or more of the noble metals, such as Ag, Au, Pt, etc. However, due to the costs associated with using noble metals and the performance that can be achieved without them, the multicomponent oxide preferably includes less than 10%, more preferably less than 2% and more preferably less than 1% noble metals by weight. A preferred multicomponent metal oxide region is essentially noble metal free.

Nanoclusters are small regions in the nanometer size range of > 0nm to 1000 nm. Preferrably, the nanoclusters are 0.5 - 50 nm in size, and more preferably 50 to 300 A in size. The nanoclusters may be partially crystalline, polycrystalline, microcrystalline, nanocrystalline, essentially amorphous, or amorphous. The nanoclusters may be formed of small crystallites or grains which themselves may be highly ordered oxides in the size range of 10-1000 A. The nanoclusters may be agglomerated to form a continuous or substantially continuous coating that has a thickness that is on the nanometer scale, e.g. of > 0nm to 1000 nm thick. The nanoclusters may be regions of varying thickness or density, such as thicker or denser towards the middle of a cluster. Regions of varying thickness permit the topology of the nanoclusters to be altered to increase surface area and catalytic activity. The nanoclusters may include small grains of differing orientation. Having nanoclusters with small grains of differing orientation can permit stacking of grains to increase the number and availability of grain boundaries to improve catalytic activity. The nanoclusters may include 10 to 100 crystallites or grains each. The grains may have a diameter of 150 A or less, preferably 100 A or less, but are preferably between 0 and 20 A. Nanoclusters having a small grain size permit greater accessibility of reactants to the active sites. The grains may have a spinel crystal structure. The nanoclusters may be highly ordered oxides, such as 100 Å - 500 A in size. Highly ordered oxides can have the properties of metals to provide enhanced catalytic activity, but are not in the 0 oxidation state. The nanoclusters or agglomerations of nanoclusters preferably have a high density. A high density may be provided by having nanoclusters or agglomerations of nanoclusters in close proximity to one another. A high density of nanoclusters provides additional active sites for improved catalytic activity. The proximity of nanoclusters and/or agglomerations preferably includes spacing of 1 to 100 Å and more preferably 2 to 40 A. The shape, size, form, proximity, density and ultimate activity of the nanoclusters may be controlled by the method of forming. By changing the method of how the nanoctusters are formed: the size, shape, density, grain stacking, and topology of the clusters can be atomically engineered.

The mixed-valence, nanoclustered catalytic material may be formed about the carrier matrix by any suitable means, such as by precipitation, electrodepositing, impregnation, electroless deposition, sputtering, etc. The catalytic material is preferably formed with a low temperature deposition, such as below 80°C, or at a temperature suitable for forming the catalyst without altering the catalytic material or the carrier matrix. The nanoclusters may be formed on, absorbed to, bonded rigidly thereto, dispersed about, electro-statically held, or simply contact the carrier matrix. The carrier matrix in turn may support the catalytically active material directly or indirectly. The mixed-valence, nanoclustered metal oxide regions are preferably formed on a carrier matrix via electroless deposition. More preferably, a controlled precipitation process that includes forming a metal complex and breaking down the complex in a controlled manner to form the nanoclusters is used. By controlling the manner and rate in which the catalytically active material is formed, different properties for materials having the same chemical composition can be provided.

A controlled precipitation process may be provided by dissolving a metal salt into a solution to form a metal salt solution and combining the metal salt solution with a complexing agent to form a metal complex. The metal complex may then be combined with a suspension of the carrier matrix. The complex may be broken down in a controlled manner by reducing the strength of the complex to electrolessly deposit an oxide about the carrier matrix. For example, a carrier matrix, such as carbon black, may be wetted with an organic solvent, such as a polar organic solvent like acetone, to form a suspension. A metal complex can then be combined with the wetted carbon and aggressively mixed. An agent, such as an acid or base, can then be added to the combination to break down the metal complex so that a catalyst forms on the carbon. The formation of the catalyst may be done in an ultrasonic bath using sonication. The catalyst may then be separated from any excess solution, dried and/or heat treated as desired.

The controlled precipitation may be done at a fast or slow rate. A fast deposition rate deposits the catalytically active material about the carrier matrix in 24 hours or less, while a slow deposition rate deposits the catalytically active material about the carrier matrix in more than 24 hours. It has been found that by altering the rate at which nanoclusters are formed, the activity of the catalyst can be changed. Preferably, deposition is done at the slow rate. Deposition rates may be adjusted in a number of ways, such as by altering temperatures, concentrations, pH, the amount of the complex present, etc. Deposition rate may also be controlled by increasing or decreasing the rate at which the metal complex is weakened. For example, a complex may be prepared by adding a metal salt to excess ammonium hydroxide and then reducing the excess ammonium ion. Further, the reaction may be controlled by adjusting the concentration of ammonium in the headspace. By increasing or decreasing the amount of ammonium in the headspace, the deposition rate and/or crystallite size of the catalyst may be controlled.

The catalytically active material may include an organometallic. The organometallic is preferably a macrocycle including one or more transition metals, such as cobalt tetramethoxyphenyl porphyrin (CoTMPP), manganese tetramethoxyphenyl porphyrin (MnTMPP) or cobalt/manganese tetramethoxyphenyl porphyrin (CoMnTMPP). The organometallic may be atomically layered on the carrier matrix. Atomically layering the organometallic provides active sites for catalytic activity without isolating the underlying material. Atomic layering can also be used to adjust the proximity of the organometallic to adjacent materials to alter the overall chemistry of active sites, such as atomically layering the organometallic next to nanoclusters or other catalytically active materials.

The organometallic may be formed about the carrier matrix in any suitable way, such as directly onto the carrier matrix or onto a material supported by the carrier matrix, such as onto mixed-valence, nanoclustered metal oxide regions. The organometallic may be formed about the carrier matrix by first preparing a solution of organometallic material and then combining the solution with the carrier matrix. The solution preferably includes an organic solvent. A preferred solvent is a polar organic solvent, such as acetone, however, other organic solvents may be substituted depending upon the organometallic's solubility and the carrier matrix.

A preferred embodiment of the method for making an organometallic catalyst includes, creating a suspension of the carrier matrix and adding a solution of organometallic to the suspension. The resulting suspension is preferably agitated for a substantial period of time, such as at least 24 hours. The catalyst may then be separated from any excess solution (such as by decanting or filtering), dried and/or heat treated as desired. Heat-treating can be used to alter the organic support structure. Heat-treating may be used to alter the catalytically active material by removing organic portions of the organometallic. Heat-treating may be accomplished by heating the catalyst in an inert gas, or a reducing atmosphere, depending on the desired valence states of the catalytically active material and the residual surrounding organic structure.

The carrier matrix may be any suitable support material based on the reaction medium of the ultimate end use. The carrier matrix is preferably carbon based. A carbon based carrier matrix is particularly useful for supporting catalytically active material in a fuel cell oxygen electrode because of its ability to help dissociate molecular oxygen into atomic oxygen. The carrier matrix is preferably an agglomerated, filamentary carbon based material. The carrier matrix may include a plurality of strands having a diameter of 20 µm or less. The carrier matrix preferably has a low density and/or high surface area. The carrier matrix may be a banded linear structure with an ill defined border, such as fluffy carbon, or may be stratified in one or more directions. The carrier matrix may be intertwined with non-distinct edges having a vertical extent which goes into the middle of the carrier region with a more dense matrix embedded towards the center of the mass. The carrier matrix may also/or alternatively have a distinct up and down wavelike pattern, may be uniform, diffuse or wispy with distinct edges. By having a dispersed carbon matrix, increased surface area can be provided while maintaining adequate support and accessibility of the catalytically active material.

In a preferred embodiment of the present invention, the catalyst comprises mixed-valence, nanoclustered metal oxide region distributed about and supported by a carrier matrix and organometallic material distributed over the mixed-valence, nanoclustered metal oxide region. A catalyst having an organometallic distributed over nanoclusters may be made by depositing the nanoclusters about a carrier matrix and then supplying the organometallic about the nanoclusters using one or more of the above procedures. By using two or more different catalytically active materials about the same carrier matrix in close proximity to one another, new and different chemistries can be achieved.

In another preferred embodiment of the present invention, the catalyst comprises organometallic material distributed about and supported by a carrier matrix and mixed-valence, nanoclustered catalysts substantially distributed over the organometallic material. A catalyst having nanoclusters distributed over organometallic material may be made by dispersing the organometallic material over a carrier matrix and then supplying the nanoclusters over the organometallic material using one or more of the procedures described above. By using two or more different catalytically active materials about the same carrier matrix in close proximity to one another new and different chemistries can be achieved.

In another preferred embodiment of the present invention, the catalytic material comprises a first mixed-valence nanoclustered catalyst distributed about and supported by a carrier matrix and a second mixed-valence nanoclustered catalyst substantially distributed over the first nanoclustered catalyst. In a preferred embodiment, the first and second mixed-valence nanoclustered catalysts are compositionally distinct. The first nanoclustered catalyst may, for example, be formed as a layer or region on the carrier matrix and a second nanoclustered catalyst may subsequently be formed thereon. The first nanoclustered catalyst may be interposed between the second nanoclustered catalyst and the carrier matrix. In another embodiment, the first and second nanoclustered catalyst regions may be spacedly disposed on different portions of the carrier matrix and arranged as discrete regions that may or may not by layered upon each other.

The first mixed-valence nanoclustered catalyst layer or region may be formed through a precipitation process or other method as described above on a carrier matrix and a subsequent precipitation process or other method as described above may be completed to deposit or form a second mixed-valence nanoclustered catalyst layer or region upon some or all of the first mixed-valence nanoclustered catalyst. The procedure can be repeated to create catalyst materials including a series of three or more nanoclustered layers or regions supported on a substrate or carrier matrix. In this embodiment, the different nanoclustered catalysts regions or layers may include one or more compositionally-distinct metals in one or more oxidation states, where different metals and/or oxidation states may be present in different layers or regions. Each layer may include a single metal or multiple metals in one or more oxidation states. In one embodiment, the nanoclustered catalysts comprise metals in the form of mixed-valence metal oxides. Different nanoclustered layers may, for example, catalyze different reaction processes to provide a multifunctional catalytic material.

In another preferred embodiment of the present invention, the catalytic material comprises a first organometallic distributed about and supported by a carrier matrix and a second organometallic substantially distributed over the first organometallic. In a preferred embodiment, the first and second organometallics are compositionally distinct. The first organometallic may, for example, be formed as a layer or region on the carrier matrix and a second organometallic may subsequently be formed thereon. The first organometallic layer or region may be formed as described above by combining a solution containing the organometallic with a suspension that includes the carrier matrix. The second organometallic may then be formed in a subsequent application of the process using a solution containing a second organometallic. The procedure can be repeated to create catalyst materials including a series of three or more organometallic layers or regions supported on a substrate or carrier matrix. In this embodiment, the different organometallic regions or layers may include one or more metals in one or more oxidation states, where compositionally-distinct metals and/or oxidation states may be present in different layers or regions. The organometallic generally includes one or more metals contained within or coordinated to a macrocyclic or chelating ligand. A macrocyclic ligand includes a cyclic coordination region or internal cavity that surrounds the coordinated metal. Examples of macrocyclic ligands include porphyrins, crytands, and spherands. Chelating ligands include bidentate, tridentate, and higher order multidentate ligands that form chelate complexes with one or more metals. Embodiments include chelating amines (e.g. ethylenediamine, ethylene triamine, EDTA etc.) and oxides (e.g. acetonates). Different organometallic layers or regions may, for example, catalyze different reaction processes to provide a multifunctional catalytic material.

In another preferred embodiment of the present invention, the catalytic material comprises a combination of layers or regions of one or more mixed-valence nanoclustered catalysts and one or more organometallics supported by a carrier matrix. A nanoclustered catalyst may, for example, be formed as a layer or region on the carrier matrix through a precipitation process or other method as described above on a carrier matrix. Once formed, a solution containing an organometallic may be combined therewith to form an organometallic layer or region on the mixed-valence nanoclustered catalyst layer or region. Subsequent layers or regions of other mixed valence nanoclustered catalysts and/or other organometallics may be formed to provide a catalyst having a sequence of three or more compositionally-distinct regions or layers comprising an organometallic or mixed-valence nanoclustered catalyst. Alternating sequences of organometallics and mixed-valence nanoclustered layers or regions, for example, may be formed to provide novel catalytic materials. Sequences including two or more layers comprising mixed-valence nanoclustered catalysts interspersed or interposed between or among two or more layers comprising organometallics are also within the scope of the instant invention.

In another embodiment of the present invention, the catalytic material includes an organometallic layer or region supported on a carrier matrix, where the organometallic layer or region includes two or more organometallics. Catalysts according to this embodiment may be prepared by including two or more organometallics in a solution and combining the solution with the carrier matrix or suspension thereof as described above. The organometallics may include compositionally-distinct metals and/or ligands or macrocycles.

In another preferred embodiment of the present invention there is provided a composite mixture of catalytic material that includes mixed-valence, nanoclustered metal oxides distributed about and supported by a first carrier matrix and organometallic material substantially uniformly distributed over and supported by another carrier matrix. The composite catalyst may be made by making mixed-valence, nanoclustered metal oxide catalyst as described above and making an organometallic catalyst as described above and blending the two together. A composite catalyst can provide improved catalytic activity for complex reactions.

The catalysts described above may be used in an oxygen electrode. The oxygen electrode may include a carbon matrix supported by a current collector. A carbon matrix can provide 1) a porous matrix with pathways for oxygen to travel to the electrolyte contacting side of the oxygen electrode and 2) enhance the dissociation of molecular oxygen into atomic oxygen. The current collector provides a conductive pathway for current to travel. The current collector preferably extends throughout the entire oxygen electrode. The current collector is preferably in electrical communication with the catalytically active material, and may be in direct contact therewith. The current collector may comprise an electrically conductive mesh, grid, foam, expanded metal, or combination thereof. For example, a preferable current collector comprises a conductive mesh having about 40 wires per 0.0254 m (1 inch) or less horizontally and about 20 wires per 0.0254 m (1 inch) or less vertically. The wires comprising the mesh may have a diameter between 1,27x10⁻⁴ m (005 inches) and 2,54x10⁻⁴m (01 inches), preferably between 1,27x10⁻⁴ m (.005 inches) and 2,032x10⁻⁴m (.008 inches). This design provides enhanced current distribution due to the reduction of ohmic resistance.

The oxygen electrode may be formed in the same manner as a conventional oxygen electrode, where the active catalyst material described above is substituted at least partly for conventional catalyst, In such a case, one or more catalyst as described above may be formed into the porous carbon material of the conventional electrode.

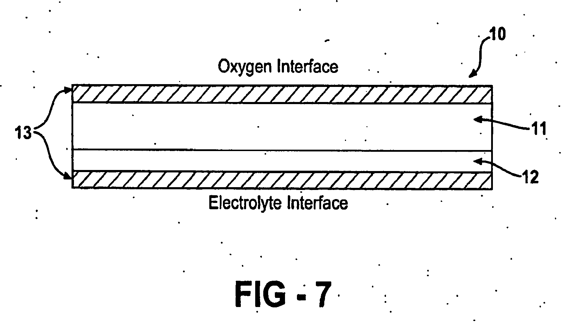

Referring now to Fig. 7, depicted therein at 10 is a fuel cell oxygen electrode according to a preferred embodiment of the present invention. As shown therein, the electrode 10 has a layered structure. A layered structure promotes oxygen dissociation and resistance to flooding within the oxygen electrode. The oxygen electrode 10 includes a gas diffusion layer 11, an active material layer 12, and at least one current collector 13. The active material layer contains a catalyst. The gas diffusion layer and the active material layer may be pleased adjacent to one another with the current collector 13 being placed in contact with the active material layer. Alternatively, the current collector may be placed outside the gas diffusion layer 11 and the active material layer 12 to form a sandwich configuration. When used inside a fuel cell, the active material layer 12 may be placed in contact with the electrolyte solution while the gas diffusion layer 11 may be placed in contact with the air or oxygen stream.

The oxygen electrode preferably has a hydrophobic component, which provides a barrier for isolating the electrolyte, or wet, side of the oxygen electrode from the gaseous, or dry, side of the oxygen electrode. The hydrophobic component may include a halogenated organic polymer compound, such as polytetrafluoroethylene (PTFE). The hydrophopic component may be combined with carbon particles in the gas diffusion layer 11 to provide the barrier. The barrier may also be formed with carbon particles coated with a polymer compound, such as PTFE coated carbon particles. The carbon particles maybe carbon black, such as Vulcan XC-72 carbon (Trademark of Cabot Corp.}, Acetylene Black, etc. The gas diffusion layer may contain approximately 30-60 percent by weight of polymer with the remainder consisting of carbon particles.

The active material layer 12 is supported by the current collector and may be composed of coated carbon particles and catalytically active material as described above. The coated carbon particles are preferably coated with polytetrafluoroethylene, which preferably contain approximately> 0-20% polytetrafluoroethylene by weight. The catalytically active material may be blended with the coated carbon particles, deposited on the coated carbon particle or deposited directly to the electrode to form a layer of the active catalyst material on the surface of the active material layer. The thickness of this layering may be anywhere from 30 Angstroms or less to as thick as 2 microns or more, depending upon the activity of the chosen material and the requirements of the end use (i.e. such as a fuel cell).

### Example 1. 5 wt% CoOx loaded on Carbon (o) (not forming part of the present invention)

I. 250 cc of NH₄OH (ammonia) was added to 25 g of carbon under ultrasonic agitation.
II. 3.75 g CoSO₄ was dissolved in 100 ml of water.
III. Once the carbon was completely wetted, II was added to I under ultrasonic agitation.
IV. Dilute NaOH solution was added to III under ultrasonic agitation over several hnurs.
V. The end material was filtered and then rinsed with water.
VI. The rinsed material was dried overnight at -80 °C.

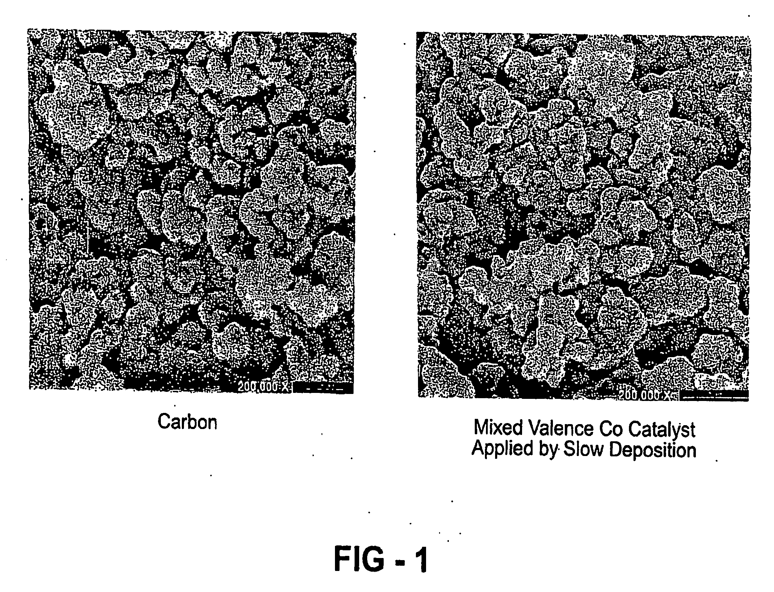

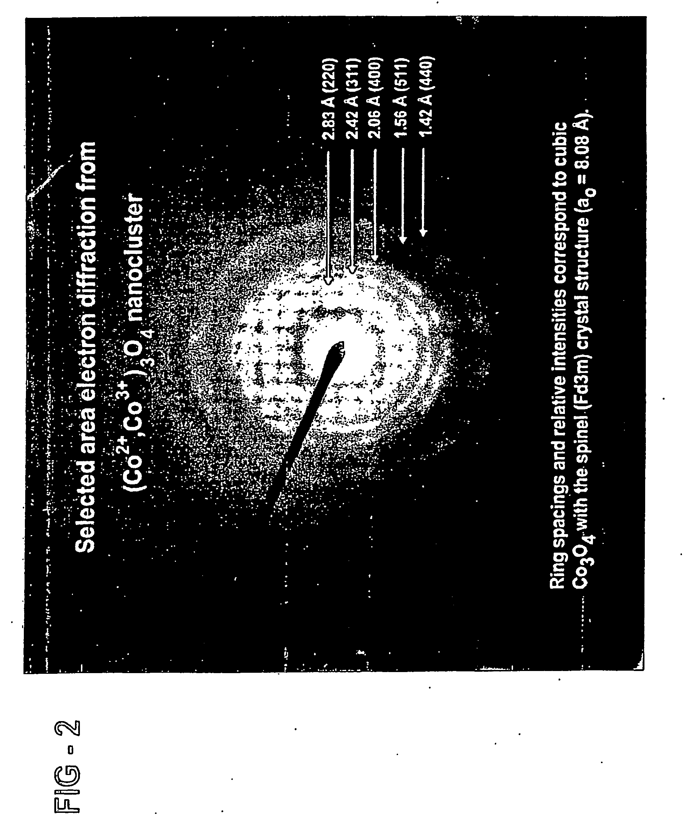

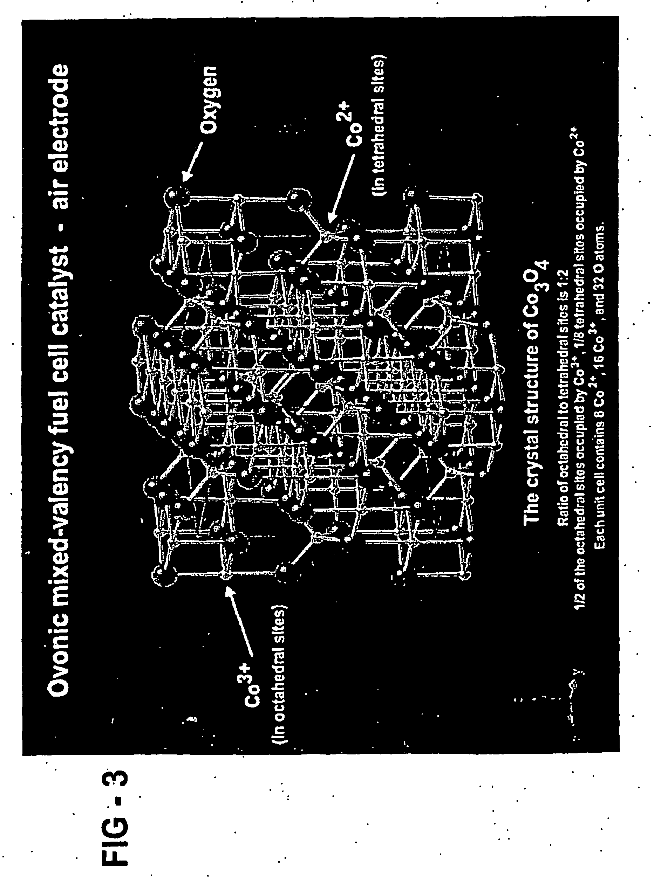

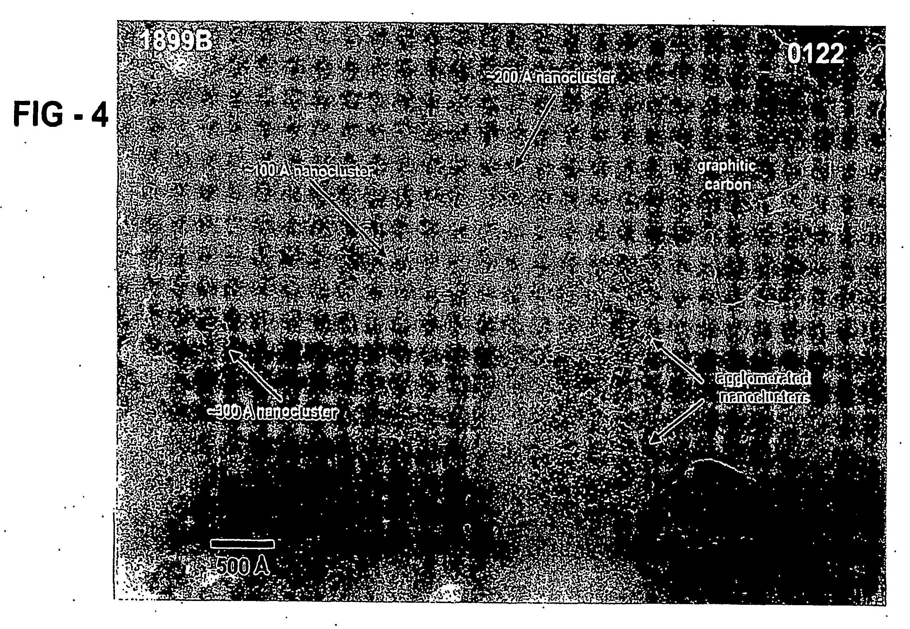

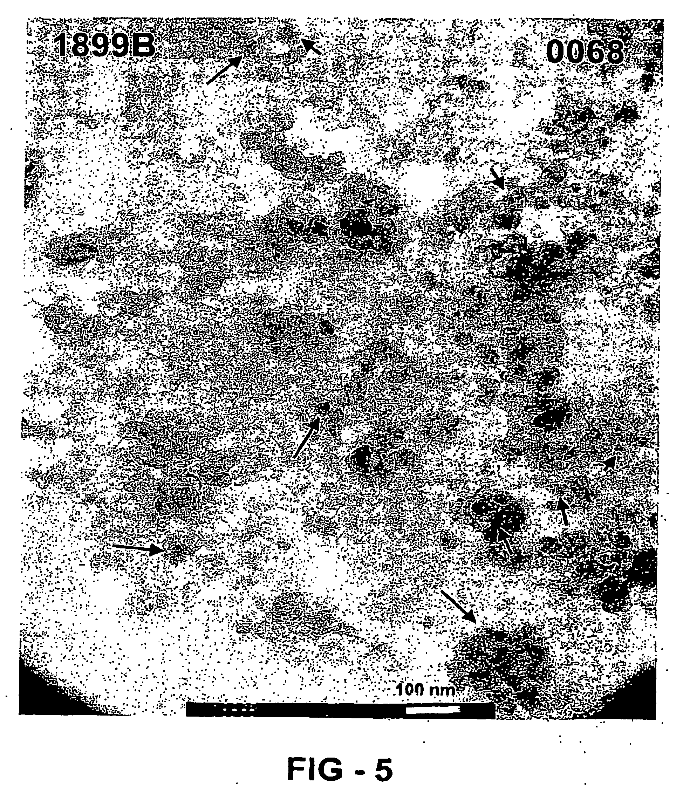

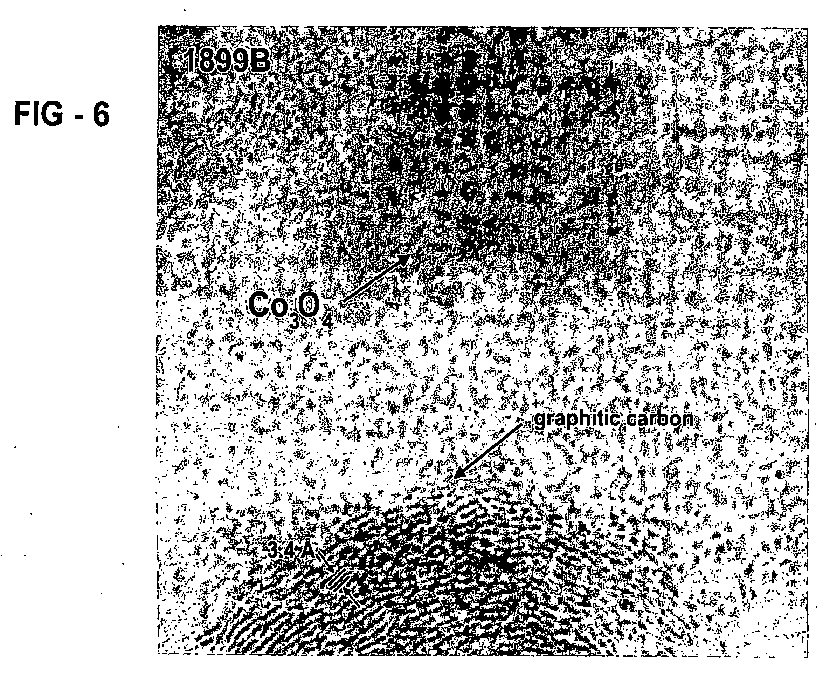

The procedure produced supported, mixed-valence nanoclustered Co oxide catalyst. A catalyst produced in accordance with Example 1 above was submitted to SEM testing and the results are shown Fig. 1. The material was also submitted to X-ray analysis to determine crystal structure. Fig. 2 shows a selected area electron diffraction pattern and Fig. 3 shows a model of a crystal structure for a mixed-valence, metal oxide. The sample was submitted to TEM analysis and the images are shown in Figs. 4, 5, and 6 under various magnifications.

### Example 2. 5 wt% MnOx loaded on Carbon B) (not forming part of the the present invention)

I. 250 cc of NH₄OH (ammonia) was added to 25 g of carbon under ultrasonic agitation.
II. 2.49 g MnSO₄xH₂O was dissolved in 100 ml of water.
III. Once the carbon was completely wetted, II was added to I under ultrasonic agitation.
IV. Dilute NaOH solution was added to III under ultrasonic agitation over several hours.
V. The resulting material was filtered and then rinsed with water.
VI. The rinsed material was dried overnight at -60 °C.

The procedure produced supported 5 wt% nanoclustered, mixed-valence, Mn oxide catalyst.

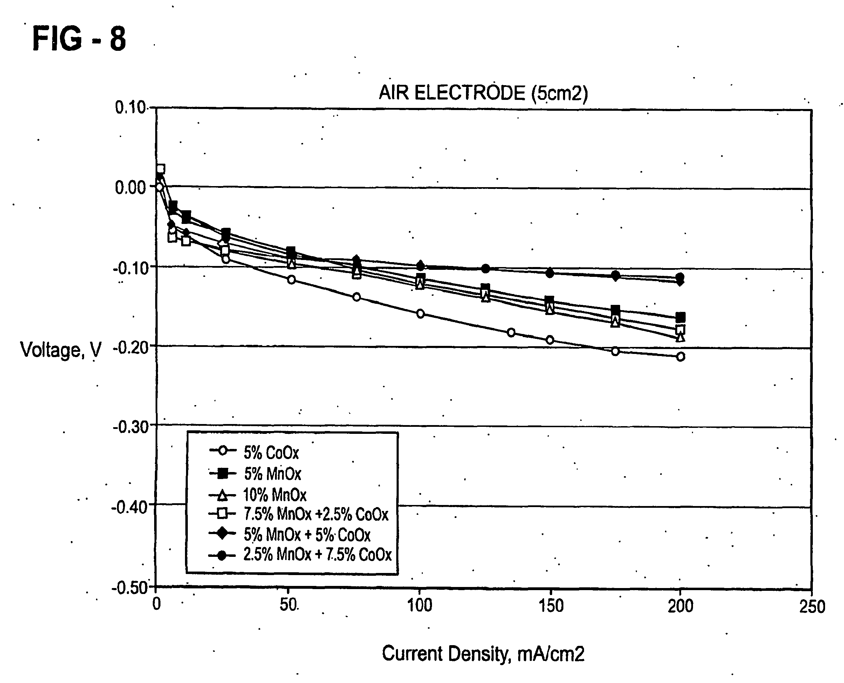

The supported catalysts above were formed into oxygen electrodes for use in a power generating alkaline fuel cell and compared in side-by-side tests, of current Density (mA/cm2) vs. Potential (V) as shown In Fig. 8. As shown, the electrodes, even though formed without noble metal or platinum catalysts, performed well.

### Example 3. 10 wt% MnOx loaded on Carbon (▲) (not forming part of the present invention)

I. 250 cc of NH₄OH (ammonia) was added to 25 g of carbon under ultrasonic agitation.
II. 5.28 g MnSO₄xH₂O was dissolved in 100 ml of water
III. Once the carbon was completely wetted, II was added to I under ultrasonic agitation.
IV. Dilute NaOH solution was added to III under ultrasonic agitation over several hours.
V. The resulting material was filtered and then rinsed with water.
VI. The rinsed material was dried overnight at -80 °C.

### Example 4. 5 wt% MnOx + 5 wt% CoOx loaded on Carbon (◆) (not forming part of the present invention)

I. 600 cc of NH₄OH (ammonia) was added to 60 g of carbon under ultrasonic agitation
II. Dissolve 6.3 g MnSO₄xH₂O + 10.2 g CoSO₄ in 100 ml of water
III. Once the carbon was completely wetted, II was added to I under ultrasonic agitation
IV. Dilute NaOH solution was added to III under ultrasonic agitation over several hours.
V. The resulting material was filtered and then rinsed with water.
VI. The rinsed material was dried overnight at -80 °C.

### Example 5. 2.5 wt% MnOx + 7.5 wt% CoOx loaded on Carbon (●) (not forming part of the present invention)

I. 600 cc of NH₄OH was added to 60 g of carbon under ultrasonic agitation
II. 3.15 g MnSO₄xH₂O + 15.46 g CoSO₄ were dissolved in 100 ml of water
III. Once the carbon was completely wetted, II was added to I under ultrasonic agitation.
IV. Dilute NaOH solution was added to III under ultrasonic agitation over several hours.
V. The resulting material was filtered and then rinsed with water.
VI. The rinsed material was dried overnight at -80 °C.

### Example 6. 7.5 wt% MnOx + 2,5 wt% CoOx Loaded on Carbon (■) (not forming part of the present invention)

I. 600 cc of NH₄OH (ammonia) was added to 60 g of carbon under ultrasonic agitation.
II. 9.5 g MnSO₄xH₂O + 5.13 g CoSO₄ were dissolved in 100 ml of water
III. Once the carbon was completely wetted, II was added to I under ultrasonic agitation
IV. Dilute NaOH solution was added to III under ultrasonic agitation over several hours.
V. The resulting material was filtered and then rinsed with water.
VI. The rinsed material was dried overnight at -80 °C.

The above supported catalysts were formed into oxygen electrodes for use in a power generating alkaline fuel cell and compared in side-by-side tests, of current Density (mA/cm2) vs. Potential (V) as plotted in Fig. 8. As shown, the electrodes, even though formed without noble metal or platinum catalysts, performed well.

### Example 7. 20 wt% Co-TMPP on Carbon (not plotted) , (not forming part of the present invention)

I. 300 cc of NH₄OH (ammonia) was added to 20 g of carbon under ultrasonic agitation.
II. 5 g of Co-TMPP was combined with 300 cc of acetone.
III. II was added to I under ultrasonic agitation over several hours.
IV. The resulting material was filtered and dried.

### Example 8. 15 wt% CoOx + 5 wt% MnOx Loaded on Carbon (not plotted) (not forming part of the present invention)

I. 400 cc of NH₄OH (ammonia) was added to 30 g of carbon under ultrasonic agitation
II. 3.56 g MnSO₄xH₂O + 17.39 g CoSO₄ were dissolved in 100 ml of water.
III. Once the carbon was completely wetted, II was added to I under ultrasonic agitation
IV. Dilute NaOH solution was added to III under ultrasonic agitation over several hours.
V. The resulting material was filtered and then rinsed with water.
VI. The rinsed material was dried overnight at -80 °C.

To increase the multi-functional activity of the catalyst, material from Example 9 was produced from material produced In accordance with Examples 7 and 8.

### Example 9. 50/50 Blend of 20 wt% Co-TMPP/15 wt% CoOx + 5 wt% MnOx (□) (not forming part of the present invention)

An electrode was prepared by blending 5.0 g of a 20 wt% Co-TMPP on carbon with 5.0 g 15 wt% CoOx + 5 wt% MnOx on carbon.

### Example 10. 2.5 wt% MnOx + 7.5 wt% CoOx loaded on Carbon (◆) (not forming part of the present)

I. 000 cc of NH₄OH was added to 60 g of carbon under ultrasonic agitation
II. 3.15 g MnSO₄xH₂O + 15.46 g CoSO₄ were dissolved in 100 ml of water
III. once the carbon was completely wetted, II was added to I under ultrasonic agitation
IV. Dilute NaOH solution was added to III under ultrasonic agitation over several hours.
V. The resulting material was filtered and then rinsed with water.
VI. The rinsed material was dried overnight at -80 °C.

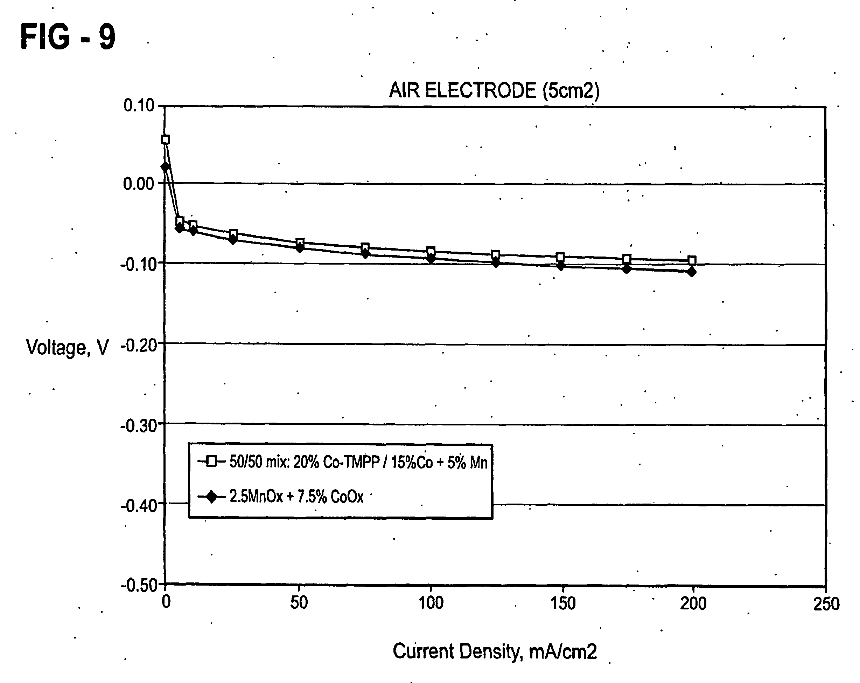

The above supported catalysts from examples 9 and 10 were formed into oxygen electrodes for use in a power generating alkaline fuel cell and compared in side-by-side tests, of current Density (mA/cm2) vs. Potential (V) as plotted in Fig. 9. As shown, the electrodes, even though formed without noble metal or platinum catalysts, performed well, and better when the multi-functionality of the catalysts were increased.

### Example 11. 10 wt% Co-TMPP and to wt% Mn-TMPP on Carbon (not plotted) (not forming part of the present invention)

I. 300 cc of NH₄OH (ammonia) was added to 20 g of carbon under ultrasonic agitation.
II. 5 g of Co-TMPP was combined with 300 cc of acetone.
III. 5 g of Mn-TMPP was combined with 300 cc of acetone.
IV. II was added to III.
V. IV was added to I under ultrasonic agitation over several hours.
VI. The resulting material was filtered and dried.

### Example 12. 10 wt% Co-TMPP and 10 wt% Mn-TMPP on Carbon (not plotted)

**I.** 300 cc of NH₄OH (ammonia) was added to 20 g of carbon under ultrasonic agitation.
II. 5 g of Co-TMPP was combined with 300 cc of acetone.
III. II was added to I under ultrasonic agitation over several hours.
IV. The resulting material was filtered and dried.
V. 300 cc of NH₄OH (ammonia) was added to 20 g of IV under ultrasonic agitation.
VI. 5 g of Mn-TMPP was combined with 300 cc of acetone.
VII. VI was added to V under ultrasonic agitation over several hours.
VIII. The resulting material was filtered and dried.

### Example 13. 5 wt% MnOx + 5 wt% CoOx loaded on Carbon (not plotted)

I. 600 cc of NH₄OH (ammonia) was added to 60 g of carbon under ultrasonic agitation
II. Dissolve 6.3 g MnSO₄xH₂O in 100 ml of water
III. Once the carbon was completely wetted, II was added to I under ultrasonic agitation
IV. Dilute NaOH solution was added to III under ultrasonic agitation over several hours.
V. The resulting material was filtered and then rinsed with water.
VI. The rinsed material was dried overnight at -80 °C.
VII. 600 cc of NH₄OH (ammonia) was added to 60 g of VI under ultrasonic agitation
VIII. Dissolve 10.2 g CoSO₄ in 100 ml of water
IX. Once VII was completely wetted, VIII was added to VII under ultrasonic agitation
X. Dilute NaOH solution was added to IX under ultrasonic agitation over several hours.
XI. The resulting material was filtered and then rinsed with water.
XII. The rinsed material was dried overnight at -80 °C.

### Example 14. 5 wt% MnOx + 20 wt% Co-TMPP loaded on Carbon (not plotted)

I. 600 cc of NH₄OH (ammonia) was added to 60 g of carbon under ultrasonic agitation
II. Dissolve 6.3 g MnSO₄xH₂O in 100 ml of water
III. Once the carbon was completely wetted, was added to I under ultrasonic agitation
IV. Dilute NaOH solution was added to III under ultrasonic agitation over several hours.
V. The resulting material was filtered and then rinsed with water.
VI. The rinsed material was dried overnight at -80 °C.
VII. 300 cc of NH₄OH (ammonia) was added to 20 g of VI under ultrasonic agitation.
VIII. 5 g of Co-TMFP was combined with 300 cc of acetone.
IX. VIII was added to VII under ultrasonic agitation over several hours.
X. The resulting material was filtered and dried.

### Example 15.

### 5 wt% CoOx + 5 wt% MnOx + 20 wt% Co-TMPP loaded on Carbon (not plotted)

I. 600 cc of NH₄OH (ammonia) was added to 60 g of carbon under ultrasonic agitation
II. Dissolve 6.3 g MnSO₄xH₂O in 100 ml of water
III. Once the carbon was completely wetted, II was added to I under ultrasonic agitation
IV. Dilute NaOH solution was added to III under ultrasonic agitation over several hours.
V. The resulting material was filtered and then rinsed with water.
VI. The rinsed material was dried overnight at -80 °C.
VII. 300 cc of NH₄OH (ammonia) was added to 20 g of VI under ultrasonic agitation.
VIII. 5 g of Co-TMPP was combined with 300 cc of acetone.
IX. VIII was added to VII under ultrasonic agitation over several hours.
X. The resulting material was filtered and dried.
XI. 600 cc of NH₄OH (ammonia) was added to 60 g of X under ultrasonic agitation
XII. Dissolve 10.2 g CoSO₄ In 100 ml of water
XIII. Once X was completely wetted, XII was added to XI under ultrasonic agitation
XIV. Dilute NaOH solution was added to XIII under ultrasonic agitation over several hours.
XV. The resulting material was filtered and then rinsed with water.
XVI. The rinsed material was dried overnight at -80°C.

While the invention has been illustrated in detail in the drawings and the foregoing description, the same is to be considered as illustrative and not restrictive in character, as it is appreciated that these catalysts may be useful in other types applications such as those described above. Further, it is understood that only the preferred embodiments have been shown and described in detail and that all changes and modifications that come within the scope of the invention are desired to be protected.

## Claims

1. A supported catalytic material comprising :
a carrier matrix;
an active catalytic material supported by said carrier matrix, said active catalytic material including a first mixed-valence nanoclustered metal oxide region and a second mixed-valence nanoclustered metal oxide region, wherein said first and second mixed-valence nanoclustered metal oxide regions are compositionally distinct.

2. The supported catalytic material of claim 1, wherein said first mixed-valence nanoclustered metal oxide region includes two or more compositionally-distinct metals.

3. The supported catalytic material of claim 2, wherein said first mixed-valence nanoclustered metal oxide region includes metals having three or more oxidation states.

4. The supported catalytic material of claim 3, wherein said second mixed-valence nanoclustered metal oxide region includes metals having three or more oxidation states.

5. The supported catalytic material of claim 1, wherein said first mixed-valence nanoclustered metal oxide region forms a layer over said carrier matrix and said second mixed-valence nanoclustered metal oxide region forms a layer over said first mixed-valence metal oxide region.

6. The supported catalytic material of claim 1 , wherein said first mixed-valence nanoclustered oxide region comprises cobalt.

7. The supported catalytic material of claim 6, wherein said first mixed-valence nanoclustered oxide region further comprises manganese.

8. The supported catalytic material of claim 6, wherein said second mixed-valence nanoclustered oxide region comprises manganese.

9. The supported catalytic material of claim 1, further comprising an organometallic region, said organometallic region being supported by said carrier matrix.

10. The supported catalytic material of claim 9, wherein said organometallic region is interposed between said first and second mixed-valence nanoclustered metal oxide regions.

11. A supported catalytic material comprising :
a carrier matrix;
an active catalytic material supported by said carrier matrix, said active catalytic material including a first organometallic region and a second organometallic region, said first organometallic region comprising a first metal coordinated to a first ligand and said second organometallic region comprising a second metal coordinated to a second ligand, wherein said first and second organometallic regions are compositionally distinct.

12. The supported catalytic material of claim 11, wherein said first metal and said second metal are compositionally distinct.

13. The supported catalytic material of claim 11 , wherein said first organometallic region forms a layer over said carrier matrix and said second organometallic region forms a layer over said first organometallic region.

14. The supported catalytic material of claim 11, wherein said first metal is cobalt.

15. The supported catalytic material of claim 14, wherein said second metal is manganese.

16. The supported catalytic material of claim 11, wherein said first ligand is a macrocycle.

17. The supported catalytic material of claim 16, wherein said second ligand is a macrocycle.

18. The supported catalytic material of claim 11, wherein said first ligand is a bidentate or tridentate ligand.

19. The supported catalytic material of claim 11, further comprising a mixed-valence nanoclustered metal oxide region, said mixed-valence nanoclustered metal oxide region being supported on said carrier matrix.

20. The supported catalytic material of claim 19, wherein said mixed-valence nanoclustered metal oxide region is interposed between said first and second organometallic regions..

## Patentansprüche

1. Gestütztes katalytisches Material, umfassend:
eine Trägermatrix;
ein aktives katalytisches Material, das durch die Trägermatrix gestützt ist, wobei das aktive katalytische Material einen ersten Nanocluster-Metalloxidbereich mit gemischten Valenzen und einen zweiten Nanocluster-Metalloxidbereich mit gemischten Valenzen enthält, wobei der erste und zweite Nanocluster-Metalloxidbereich mit gemischten Valenzen von der Zusammensetzung her verschieden sind.

2. Gestütztes katalytisches Material nach Anspruch 1, wobei der erste Nanocluster-Metalloxidbereich mit gemischten Valenzen zwei oder mehr von der Zusammensetzung her verschiedene Metalle enthält.

3. Gestütztes katalytisches Material nach Anspruch 2, wobei der erste Nanocluster-Metalloxidbereich mit gemischten Valenzen Metalle mit drei oder mehr Oxidationszuständen enthält.

4. Gestütztes katalytisches Material nach Anspruch 3, wobei der zweite Nanocluster-Metalloxidbereich mit gemischten Valenzen Metalle mit drei oder mehr Oxidationszuständen enthält.

5. Gestütztes katalytisches Material nach Anspruch 1, wobei der erste Nanocluster-Metalloxidbereich mit gemischten Valenzen eine Schicht über der Trägermatrix ausbildet und der zweite Nanocluster-Metalloxidbereich mit gemischten Valenzen eine Schicht über dem ersten Nanocluster-Metalloxidbereich mit gemischten Valenzen ausbildet.

6. Gestütztes katalytisches Material nach Anspruch 1, wobei der erste Nanocluster-Metalloxidbereich mit gemischten Valenzen Kobalt umfasst.

7. Gestütztes katalytisches Material nach Anspruch 6, wobei der erste Nanocluster-Metalloxidbereich mit gemischten Valenzen ferner Mangan umfasst.

8. Gestütztes katalytisches Material nach Anspruch 6, wobei der zweite Nanocluster-Metalloxidbereich mit gemischten Valenzen Mangan umfasst.

9. Gestütztes katalytisches Material nach Anspruch 1, ferner umfassend einen organometallischen Bereich, wobei der organometallische Bereich durch die Trägermatrix gestützt ist.

10. Gestütztes katalytisches Material nach Anspruch 9, wobei der organometallische Bereich zwischen dem ersten und zweiten Nanocluster-Metalloxidbereich mit gemischten Valenzen eingeschoben ist.

11. Gestütztes katalytisches Material, umfassend:
eine Trägermatrix;
ein aktives katalytisches Material, das durch die Trägermatrix gestützt ist, wobei das aktive katalytische Material einen ersten organometallischen Bereich und einen zweiten organometallischen Bereich enthält, wobei der erste organometallische Bereich ein erstes Metall umfasst, das zu einem ersten Liganden koordiniert ist, und der zweite organometallische Bereich ein zweites Metall umfasst, das
zu einem zweiten Liganden koordiniert ist, wobei der erste und zweite organometallische Bereich von der Zusammensetzung her verschieden sind.

12. Gestütztes katalytisches Material nach Anspruch 11, wobei das erste Metall und das zweite Metall von der Zusammensetzung her verschieden sind.

13. Gestütztes katalytisches Material nach Anspruch 11, wobei der erste organometallische Bereich eine Schicht über der Trägermatrix ausbildet und der zweite organometallische Bereich eine Schicht über dem ersten organometallischen Bereich ausbildet.

14. Gestütztes katalytisches Material nach Anspruch 11, wobei das erste Metall Kobalt ist.

15. Gestütztes katalytisches Material nach Anspruch 14, wobei das zweite Metall Mangan ist.

16. Gestütztes katalytisches Material nach Anspruch 11, wobei der erste Ligand ein Makrozyklus ist.

17. Gestütztes katalytisches Material nach Anspruch 16, wobei der zweite Ligand ein Makrozyklus ist.

18. Gestütztes katalytisches Material nach Anspruch 11, wobei der erste Ligand ein zweizähniger oder dreizähniger Ligand ist.

19. Gestütztes katalytisches Material nach Anspruch 11, ferner umfassend einen Nanocluster-Metalloxidbereich mit gemischten Valenzen, wobei der Nanocluster-Metalloxidbereich mit gemischten Valenzen auf der Trägermatrix gestützt ist.

20. Gestütztes katalytisches Material nach Anspruch 19, wobei der Nanocluster-Metalloxidbereich mit gemischten Valenzen zwischen dem ersten und zweiten organometallischen Bereich eingeschoben ist.

## Revendications

1. Matériau catalytique supporté comprenant :
une matrice de support ;
un matériau catalytique actif supporté par ladite matrice de support, ledit matériau catalytique actif comportant une première région d'oxyde de métal en nanograppes de valence mixte et une deuxième région d'oxyde de métal en nanograppes de valence mixte, où lesdites première et deuxième régions d'oxyde de métal en nanograppes de valence mixte sont distinctes au niveau de la composition.

2. Matériau catalytique supporté de la revendication 1, dans lequel ladite première région d'oxyde de métal en nanograppes de valence mixte comporte deux métaux ou plus distincts au niveau de la composition.

3. Matériau catalytique supporté de la revendication 2, dans lequel ladite première région d'oxyde de métal en nanograppes de valence mixte comporte des métaux ayant trois états d'oxydation ou plus.

4. Matériau catalytique supporté de la revendication 3, dans lequel ladite deuxième région d'oxyde de métal en nanograppes de valence mixte comporte des métaux ayant trois états d'oxydation ou plus.

5. Matériau catalytique supporté de la revendication 1, dans lequel ladite première région d'oxyde de métal en nanograppes de valence mixte forme une couche sur ladite matrice de support et ladite deuxième région d'oxyde de métal en nanograppes de valence mixte forme une couche sur ladite première région d'oxyde de métal de valence mixte.

6. Matériau catalytique supporté de la revendication 1, dans lequel ladite première région d'oxyde en nanograppes de valence mixte comprend du cobalt.

7. Matériau catalytique supporté de la revendication 6, dans lequel ladite première région d'oxyde en nanograppes de valence mixte comprend en outre du manganèse.

8. Matériau catalytique supporté de la revendication 6, dans lequel ladite deuxième région d'oxyde en nanograppes de valence mixte comprend du manganèse.

9. Matériau catalytique supporté de la revendication 1, comprenant en outre une région organométallique, ladite région organométallique étant supportée par ladite matrice de support.

10. Matériau catalytique supporté de la revendication 9, dans lequel ladite région organométallique est interposée entre lesdites première et deuxième régions d'oxyde de métal en nanograppes de valence mixte.

11. Matériau catalytique supporté comprenant :
une matrice de support ;
un matériau catalytique actif supporté par ladite matrice de support, ledit matériau catalytique actif comportant une première région organométallique et une deuxième région organométallique, ladite première région organométallique comprenant un premier métal coordonné à un premier ligand et ladite deuxième région organométallique comprenant un deuxième métal coordonné à un deuxième ligand, où lesdites première et deuxième régions organométalliques sont distinctes au niveau de la composition.

12. Matériau catalytique supporté de la revendication 11, dans lequel ledit premier métal et ledit deuxième métal sont distincts au niveau de la composition.

13. Matériau catalytique supporté de la revendication 11, dans lequel ladite première région organométallique forme une couche sur ladite matrice de support et ladite deuxième région organométallique forme une couche sur ladite première région organométallique.

14. Matériau catalytique supporté de la revendication 11, dans lequel ledit premier métal est du cobalt.

15. Matériau catalytique supporté de la revendication 14, dans lequel ledit deuxième métal est du manganèse.

16. Matériau catalytique supporté de la revendication 11, dans lequel ledit premier ligand est un macrocycle.

17. Matériau catalytique supporté de la revendication 16, dans lequel ledit deuxième ligand est un macrocycle.

18. Matériau catalytique supporté de la revendication 11, dans lequel ledit premier ligand est un ligand bidenté ou tridenté.

19. Matériau catalytique supporté de la revendication 11, comprenant en outre une région d'oxyde de métal en nanograppes de valence mixte, ladite région d'oxyde de métal en nanograppes de valence mixte étant supportée sur ladite matrice de support.

20. Matériau catalytique supporté de la revendication 19, dans lequel ladite région d'oxyde de métal en nanograppes de valence mixte est interposée entre lesdites première et deuxième régions organométalliques.
